# EUROPEAN PATENT APPLICATION

(11) **EP 3 499 129 A2**
(43) Date of publication of application: **19.06.2019**
(21) Application number: 18212623.5
(22) Date of filing: 14.12.2018
(51) Int. Cl.: F24C 15/12, F24C 15/14, F24C 7/00

(54) **COOKING DEVICE**

(30) Priority: 15.12.2017 CN 201721768236 U
(71) Applicant: BSH Hausgeräte GmbH, 81739 München (DE)
(72) Inventor: Cui, Huawei, Nanjing, 210046 (CN); Lu, Peng, Nanjing, 210046 (CN); Zhu, Qingmei, Nanjing, 210046 (CN)

(57) **Abstract**

The present invention discloses a cooking device (1) comprising a cooktop body (2) and a cooking platform (3), wherein an embedded cooker (4) is disposed below the cooking platform (3), and a cover body (5) is disposed above the embedded cooker (4), wherein the cover body (5) is transformed between a first position and a second position, wherein the cover body (5) in the first position is in an opened state; and the cover body (5) in the second position is in a closed state, and an upper surface (51) of the cover body (5) and an upper surface (31) of the cooking platform (3) are on a same horizontal plane.

## Description

### BACKGROUND

### Technical Field

The present invention relates to a cooking device, and specifically, to an embedded cooking device.

### Related Art

With the continuous development of life quality, people's requirements for kitchen integrity and automation daily increase. Multifunctional cookers in current kitchens daily increase, for example, an electric rice cooker, an electric stewpot, and an electric pressure cooker are independent, and are generally placed on a countertop or a cooking bench of a kitchen, and occupy kitchen space that is originally limited. Meanwhile, it also brings trouble to operation and oil cleaning aspects for users.

Therefore, the prior art needs to be further improved and refined.

### SUMMARY

The present invention provides a more simple and convenient cooking device.

To achieve the objective, according to an aspect of the present invention, a cooking device is provided, comprising a cooktop body and a cooking platform, wherein an embedded cooker is disposed below the cooking platform, a cover body is disposed above the embedded cooker, wherein the cover body is transformed between a first position and a second position, wherein the cover body in the first position is in an opened state; and the cover body in the second position is in a closed state, and an upper surface of the cover body and an upper surface of the cooking platform are on a same horizontal plane.

A multifunctional cooker is integrated on a cooking bench, and after being electrified, the embedded cooker can implement functions such as pan-frying, stir-frying, steaming, frying, boiling, and stewing or have some or all functions of an electric rice cooker, an electric stewpot, and an electric pressure cooker. Different from the prior art, the cooker is completely embedded below the cooking platform, and when the cover body is closed, the upper surface of the cover body and the upper surface of the cooking platform are on a same horizontal plane. In this way, cookers placed on a countertop of a kitchen can be reduced, and the kitchen can be maintained neat and nice, and is also easily cleaned.

Preferably, the cooking platform is further provided with an induction cooktop and/or a gas cooktop. In this way, other cooking requirements of users can also be ensured.

Preferably, the cooking device includes a control means and an operation panel, wherein the operation panel is disposed on the cooking platform, and the control means inputs a control instruction via the operation panel to control the embedded cooker and the cover body to work. The operation panel uses touch buttons to maintain a flat surface with a plane of the cooking platform.

Preferably, the cooking device includes a drive means for driving the cover body to be transformed between the first position and the second position; and a locking means for locking or unlocking the cover body in the second position, wherein the control means controls the locking means and the drive means to work.

Preferably, the cooking device includes an inner container, wherein an upper end of the inner container is placed on a support of an upper end of the embedded cooker; the support is provided with an opening, and a water collecting groove is disposed below the support; and a liquid substance spilled from the inner container during cooking enters the water collecting groove from the opening. The design can ensure that a substance generated during cooking such as moisture, foam, or oil is not spilled outside of the cooker, but enters the water collecting groove.

Preferably, the support is a detachable structure. The detachable support is convenient for cleaning or changing.

Preferably, the water collecting groove is connected to a discharge pipe, and the discharge pipe is connected to a sewerage system. Liquid substances overly accumulated are further discharged to a sewerage system of the kitchen, such as a sewer.

Preferably, the operation panel is provided with a slide trigger area, the slide trigger area sends an unlocking signal after being triggered, and after receiving the unlocking signal, the control means controls the locking means to unlock.

Preferably, the cooking device comprises a pressure relief means disposed on the cover body, in communication with an exhaust hole on the cover body. When the cooker is a pressure cooker, the cover body is provided with a sealing ring, and when the cover body is closed, the sealing ring closely fits in the support. When a pressure in the cooker is too high, the pressure needs to be reduced by discharging gas, and after the pressure relief means is opened, the gas is discharged from the exhaust hole.

Preferably, the cooking device comprises a stirring apparatus, wherein the stirring apparatus has a drive member and a stirring member, the drive member driving the stirring member to rotate. The drive member is an electric drive means such as a motor, the stirring member may also be rotated by manually driving a rotating component. In this way, it can be ensured that food materials in the cooker can be stirred during cooking, so that the temperature of soup in the cooker is evenly distributed, the food materials are not easily burnt, nutrition of the materials is better released, and a boiling time is shortened and energy is saved.

By means of the present invention, a problem in the prior art that a plurality of independent cookers in a kitchen causes crowded space of the kitchen is resolved, cookers placed on a countertop of the kitchen are reduced, the kitchen is maintained neat and nice, and is easily cleaned, and a user experience is improved.

### BRIEF DESCRIPTION OF THE DRAWINGS

The accompanying drawings described herein are intended to provide a further understanding of the present invention, and form part of this application. Exemplary embodiments of the present invention and descriptions of the exemplary embodiments are used for explaining the present invention and are not intended to represent any limitation of the present invention. In the accompanying drawings:
FIG. 1 is a schematic structural diagram of a cooking device
FIG. 2 is a schematic diagram of the cooking device when a cover body is in a first position
FIG. 3 is a schematic diagram of a cooking platform when the cover body is in a second position
FIG. 4 is a schematic diagram of the cooking device when the cover body is in the second position; and
FIG. 5 is a schematic structural diagram of a support.

In the accompanying drawings, 1 is a cooking device, 2 is a cooktop body, 3 is a cooking platform, 4 is an embedded cooker, 5 is a cover body, 6 is a control means, 7 is an operation panel, 8 is a drive means, 9 is a locking means, 10 is an inner container, 11 is a support, 12 is a discharge pipe, 13 is a pressure relief means, and 14 is a stirring apparatus.

### DETAILED DESCRIPTION

The following describes the present invention in detail with reference to the accompanying drawings and in combination with embodiments. It should be noted that, the embodiments in this application and features in the embodiments may be combined with each other without conflict.

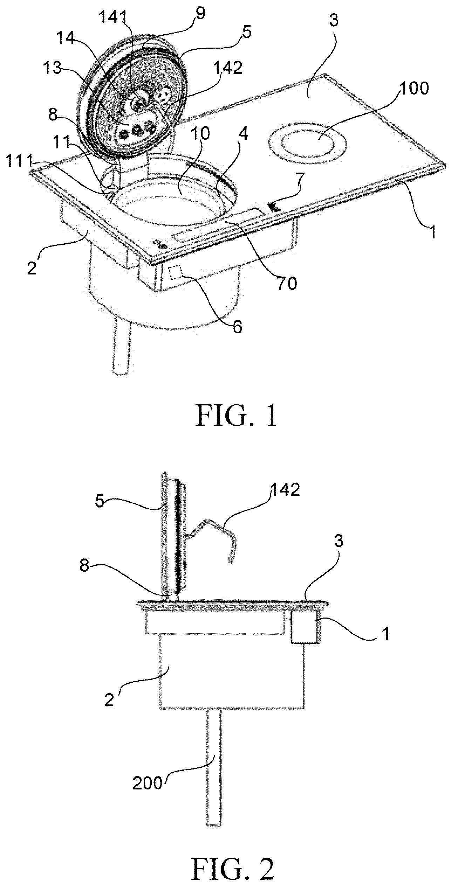

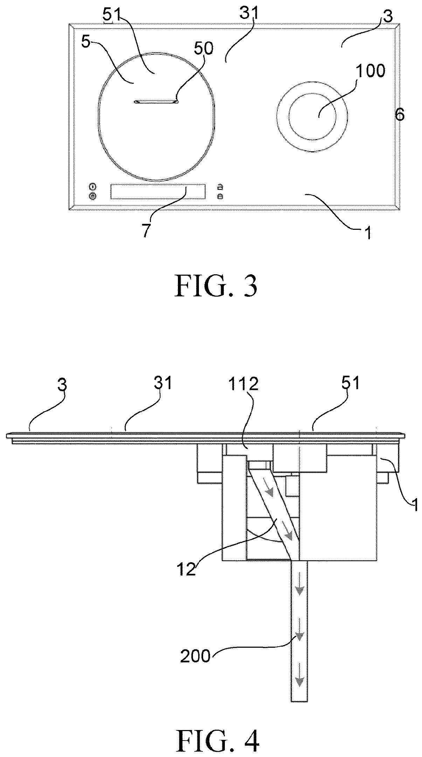

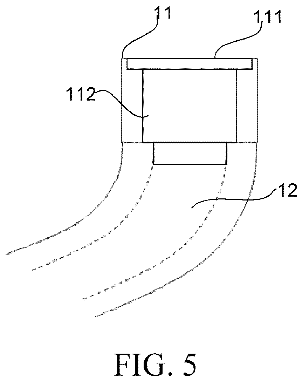

This embodiment provides a cooking device. FIG. 1 is a schematic structural diagram of a cooking device, FIG. 2 is a schematic diagram of the cooking device when a cover body is in a first position, FIG. 3 is a schematic diagram of a cooking platform when the cover body is in a second position, FIG. 4 is a schematic diagram of a cooking device when the cover body is in the second position, and FIG. 5 is a schematic structural diagram of a support. As shown in FIG. 1, FIG. 2, FIG. 3, FIG. 4, and FIG. 5:
The cooking device 1 has a cooktop body 2 and a cooking platform 3, and the cooking platform 3 may be further provided with an induction cooktop 100 and/or a gas cooktop 100. The combination design can ensure other cooking requirements of users.

An embedded cooker 4 is disposed below the cooking platform 3, and after being electrified, the embedded cooker 4 can implement functions such as pan-frying, stir-frying, steaming, frying, boiling, and stewing or have some or all functions of an electric rice cooker, an electric stewpot, and an electric pressure cooker.

A cover body 5 is disposed above the embedded cooker 4, and is connected to the cooktop body 2, and the cover body 5 is transformed between a first position P1 (vertical or slant position) and a second position P2 (horizontal position). The cover body 5 in the first position P1 is in an opened state; and the cover body 5 in the second position P2 is in a closed state, and an upper surface 51 of the cover body 5 and an upper surface 31 of the cooking platform 3 are on a same horizontal plane.

Different from the prior art, the embedded cooker 4 is completely embedded below the cooking platform 3, and when the cover body 5 is closed, the upper surface 51 of the cover body 5 and the upper surface 31 of the cooking platform 3 are on a same horizontal plane. In this way, cookers placed on a countertop of a kitchen can be reduced, and the kitchen is maintained neat and nice, and is also easily cleaned.

The cooking device 1 further includes a control means 6 and an operation panel 7, where the operation panel 7 is disposed on the cooking platform 3, and the control means 6 inputs a control instruction via the operation panel 7 to control the embedded cooker 4 and the cover body 5 to work. The operation panel 7 uses touch buttons to maintain a flat surface with a plane of the cooking platform 3.

The cooking device 1 further includes a drive means 8 for driving the cover body 5 to be transformed between the first position P1 and the second position P2; and a locking means 9 for locking or unlocking the cover body 5 in the second position P2. The control means 6 controls the locking means 9 and the drive means 8 to work. The operation panel 7 is provided with a slide trigger area 70, the slide trigger area 70 sends an unlocking signal after being triggered, and after receiving the unlocking signal, the control means 6 controls the locking means 9 to unlock.

Preferably, as shown in FIG. 1, FIG. 4, and FIG. 5, the cooking device 1 includes an inner container 10, wherein an upper end of the inner container 10 is placed on a support 11 of an upper end of the embedded cooker 4; the support 11 is provided with an opening 111, and a water collecting groove 112 is disposed below the support 11; and a liquid substance spilled from the inner container 10 during cooking enters the water collecting groove 112 from the opening 111. The design can ensure that a substance generated during cooking such as moisture, foam, or oil is not spilled outside of the cooker, but enters the water collecting groove. The support 11 is a detachable structure convenient for cleaning or changing.

Further, the water collecting groove 112 is connected to a discharge pipe 12, and the discharge pipe 12 is connected to a sewerage system 200. Liquid substances overly accumulated are further discharged to a sewerage system of the kitchen, such as a sewer.

Preferably, as shown in FIG. 1, the cooking device 1 includes a pressure relief means 13 disposed on the cover body 5, is communication with an exhaust hole 50 on the cover body 5. When the embedded cooker 4 is an electric pressure cooker, the cover body 5 is provided with a sealing ring, and when the cover body is closed, the sealing ring closely fits in the support 11. When a pressure in the cooker is too high, the pressure needs to be reduced by discharging gas, and after the pressure relief means 13 is opened, the gas is discharged from the exhaust hole 50.

Preferably, as shown in FIG. 1, the cooking device 1 includes a stirring apparatus 14, the stirring apparatus 14 has a drive member 141 and a stirring member 142, and the drive member drives the stirring member 142 to rotate. The drive member 141 is an electric drive means such as a motor, the stirring member 142 may also be rotated by manually driving a rotating component. In this way, it can be ensured that food materials in the cooker can be stirred during cooking, so that the temperature of soup in the cooker is evenly distributed, the food materials are not easily burnt, nutrition of the materials is better released, and a boiling time is shortened and energy is saved.

The various specific implementations described above and shown in the accompanying drawings are only used to illustrate the present invention, but not all of the present invention. Variations in any form made to the present invention by a person of ordinary skill in the art without departing from the scope of the basic technical idea of the present invention shall fall within the protection scope of the present invention.

## Claims

1. A cooking device (1) comprising a cooktop body (2) and a cooking platform (3), wherein an embedded cooker (4) is disposed below the cooking platform (3), and a cover body (5) is disposed above the embedded cooker (4), **characterized in that** the cover body (5) is transformed between a first position and a second position, wherein
the cover body (5) in the first position is in an opened state; and
the cover body (5) in the second position in a closed state, and an upper surface (51) of the cover body (5) and an upper surface (31) of the cooking platform (3) are on a same horizontal plane.

2. The cooking device according to claim 1, **characterized in that**
the cooking platform (3) is further provided with an induction cooktop (100) and/or a gas cooktop (100).

3. The cooking device according to claim 1, **characterized by** comprising
a control means (6) and an operation panel (7), wherein
the operation panel (7) is disposed on the cooking platform (3), and the control means (6) inputs a control instruction via the operation panel (7) to control the embedded cooker (4) and the cover body (5) to work.

4. The cooking device according to claim 3, **characterized by** comprising
a drive means (8) for driving the cover body (5) to be transformed between the first position and the second position; and
a locking means (9) for locking or unlocking the cover body (5) in the second position, wherein
the control means (6) controls the locking means (9) and the drive means (8) to work.

5. The cooking device according to claim 4, **characterized by** comprising
an inner container (10), wherein an upper end of the inner container (10) is placed on a support (11) of an upper end of the embedded cooker (4);
the support (11) is provided with an opening (111), and a water collecting groove (112) is disposed below the support (11); and
a liquid substance spilled from the inner container (10) during cooking enters the water collecting groove (112) from the opening (111).

6. The cooking device according to claim 5, **characterized in that**
the support (11) is a detachable structure.

7. The cooking device according to claim 5, **characterized in that**
the water collecting groove (112) is connected to a discharge pipe (12), and the discharge pipe (12) is connected to a sewerage system (200).

8. The cooking device according to claim 4, **characterized in that**
the operation panel (7) is provided with a slide trigger area (70), the slide trigger area sends an unlocking signal after being triggered, and after receiving the unlocking signal, the control means (6) controls the locking means (9) to unlock.

9. The cooking device according to claim 1, **characterized by** comprising
a pressure relief means (13) disposed on the cover body (5), in communication with an exhaust hole (50) on the cover body (5).

10. The cooking device according to claim 1, **characterized by** comprising
a stirring apparatus (14), wherein the stirring apparatus (14) has a drive member (141) and a stirring member (142), the drive member (141) driving the stirring member (142) to rotate.
